Europäisches Patentamt

(19) European Patent Office

Office européen des brevets

(11) Publication number: **0 108 185**
**A2**

(12) **EUROPEAN PATENT APPLICATION**

(21) Application number: **82830249.7**

(22) Date of filing: **07.10.82**

(51) Int. Cl.³: **B 29 H 3/00**

(43) Date of publication of application:
**16.05.84 Bulletin 84/20**

(84) Designated Contracting States:
**AT BE CH DE FR GB LI LU NL SE**

(71) Applicant: **TAGO RUBBER S.r.l.**
**Via Lamarmora 30**
**I-10128 Torino(IT)**

(72) Inventor: **Negri, Pierluigi**
**Via Madonna della Salette 4**
**I-10146 Torino(IT)**

(74) Representative: **Bosotti, Luciano et al,**
**c/o Jacobacci-Casetta & Perani S.p.A. Via Alfieri, 17**
**I-10121 Torino(IT)**

(54) **Apparatus for extruding preformed articles, particularly rubber articles.**

(57) The machine comprises, in combination, an extruder (2) and a cutter blade (3) for dividing the material leaving the extruder, and is particularly suitable for the production of preformed rubber pieces intended to undergo a subsequent moulding operation. The extruder (2) comprises a cylinder (4) within which is sealingly slidable a piston (8) which is reciprocatingly displaceable, under the action of a push rod (7) driven by a hydraulic cylinder (9), between an advanced position in which the piston (8) is in contact with an extrusion die (5) carried at one end of the cylinder (4), and a withdrawn position in which the piston (8) is at a predetermined distance from the base wall (6) which closes the opposite end of the cylinder. A heated rubber mixture is fed into an end portion of the cylinder (4) adjacent the base wall (6) and opposite the extrusion die (5). The piston (8) is provided with passage means (8a) controlled by valve means which allow the passage of the rubber mixture through the piston (8) during its stroke from the advanced position to the withdrawn position and cuts off this passage during the stroke in the opposite direction. With the machine are associated a sensor (13) of the linear displacement of the piston (8) and control means (14) for the cutter for effecting the cutting of the extrusion at each linear displacement of the piston corresponding to a predetermined value.

./...

Fig.1

"Apparatus for extruding preformed articles, particularly rubber articles"

The present invention relates to machines for producing preformed pieces, particularly preformed rubber pieces intended to undergo a subsequent moulding operation, and is particularly concerned with machines comprising in combination, an extruder and a cutter for dividing the material leaving the extruder.

In machines according to the prior art, the extrusion die is hinged to the cylinder of a piston extruder to allow the loading of the material to be extruded. As applied to the manufacture of preformed rubber pieces, this material is constituted by a wound roll of rubber obtained by previously working pieces of rubber in a mixing cylinder which has the function of heating the rubber by mechanical action to a temperature of between 50° and 90°, and then treating the worked material in a rolling machine. The hot wound roll is introduced into the cylinder of the extruder through its outlet end which is accessible due to the hinging of the extrusion die.

The production of preformed pieces of rubber by extruders according to the prior art presents considerable difficulties due to the need to feed the machines intermittently with hot material in the presence of polluting fumes from the heated rubber.

The object of the present invention is to provide a machine for producing preformed pieces, particularly preformed rubber pieces, of the type specified above which does not have the aforementioned disadvantages.

In order to achieve this object, the present invention provides a machine for producing preformed pieces of the type specified above, characterised in that the extruder comprises:

- a cylinder carrying an extrusion die at one end and closed at the other end by a base wall;

- a piston sealingly slidable in the cylinder;

- a push rod connected to the piston and projecting from the cylinder through a hole in the base wall;

- means for reciprocating the rod and causing the displacement of the piston between an advanced position in which the piston is in contact with the extrusion die, and a withdrawn position in which the piston is at a predetermined distance from the base wall, and

- a device for continuously feeding material to be extruded into that end portion of the cylinder which is between the base wall and the piston when the piston is in its withdrawn position, the piston being provided with passage means controlled by valve means arranged to allow the passage of the material to be extruded through the piston during the return stroke, in which the piston moves from the advanced position to the withdrawn position, and to cut off this passage during the working stroke in which the piston moves from the withdrawn position to the advanced position.

By virtue of this characteristic, in its application to the manufacture of preformed rubber pieces, the machine according to the invention may be supplied continuously with a strip of rubber at ambient temperature, thus allowing the achievement of a higher productivity and better environmental conditions for the attached workers.

Preferably, the device for continuously feeding the extruder is constituted by a motor-driven screw which communicates with the extruder through a connecting duct in which a low pressure is created to eliminate gaseous inclusions in the material to be extruded.

The invention will now be described purely by way of non-limiting example with reference to the appended drawings, in which:

Figure 1 is a partially-sectioned elevational view

- 3 -

of a machine according to the invention;

Figures 2 and 3 illustrate details of Figure 1 on an enlarged scale with reference to different working positions of parts of the machine, and.

Figures 4 and 5 illustrate schematically several components of a control circuit of the machine of Figure 1.

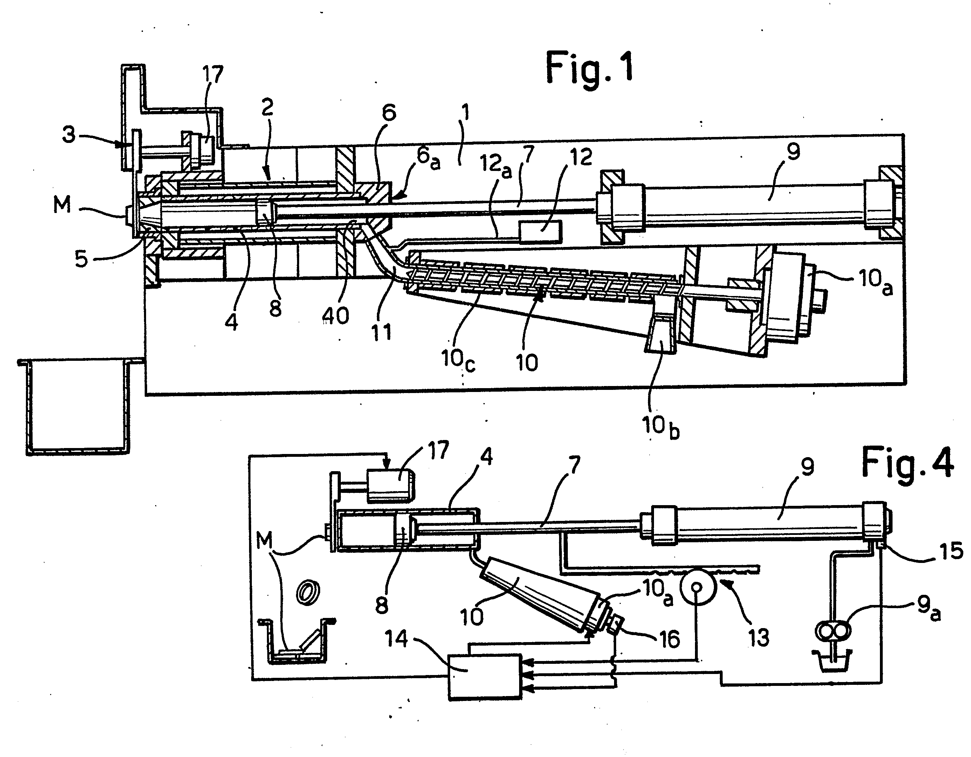

In Figure 1 there is shown a table 1 to which an extruder, generally indicated 2, and a rotary blade cutter 3 for dividing the material M leaving the extruder 2 are fixed by respective supports.

The extruder 2 includes a cylinder 4 with an extrusion die 5 at one end.

The cylinder 4 is closed at the other end by a base wall 6 with a hole 6a through which a rod 7 connected to a piston 8 sealingly slidable in the cylinder 4 projects from the cylinder 4.

The rod 7 is connected at its end opposite the piston 8 to a hydraulic cylinder 9 actuated by a volumetric pump 9a, which reciprocates the rod axially of the cylinder 4 and causes the displacement of the piston 8 between an advanced position in which the piston 8 is in contact with the extrusion die 5, and a withdrawn position in which the piston 8 is located at a predetermined distance from the base wall 6.

A feed device connected to the cylinder 4 is constituted by a screw 10 driven by a motor 10a and is provided with a mouth 10b intended to be fed continuously with a strip of rubber mixture at ambient temperature in operation.

Heating means 10c, for example, oil heaters, are associated with the screw 10 so that the rubber mixture is heated to the temperature necessary for its extrusion during its passage through the screw 10 by contact with the hot walls of the screw 10 and the mechanical working which it undergoes in the screw.

The screw 10 is put into communication with the cylinder 4 by a connecting duct 11 which opens into that end portion 4b of the cylinder 4 which is between the base wall 6 and the piston 8, when the piston 8 is in its withdrawn position.

A vacuum pump 12 communicates through a connector passage 12a with the connecting duct 11, so as to create a low pressure in this duct 11 and eliminate any gaseous inclusions in the form of bubbles in the rubber mixture which is fed to the cylinder 4.

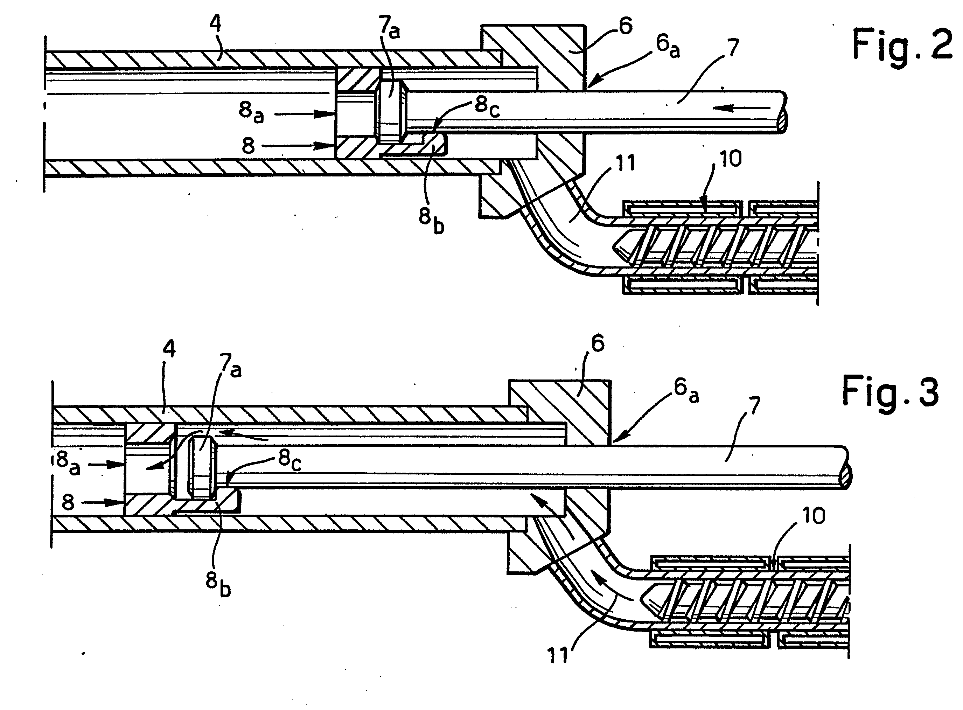

The end of the rod 7 adjacent the piston 8 (Figures 2 and 3) has an enlarged head 7a. The piston 8 is provided with a central aperture 8a and a plurality of lugs 8b which extend axially along the inner surface of the cylinder 4 towards the base wall 6.

Each lug 8b has a lip 8c at its free end which is turned inwardly of the cylinder 4.

The enlarged head 7a of the rod 7 is guided by the lugs 8b for sliding relative to the piston 8 between two limit positions defined respectively by the bearing of the head 7a against the lips 8c (Figure 3) and the bearing of the head 7a against the body of the piston 8 (Figure 2).

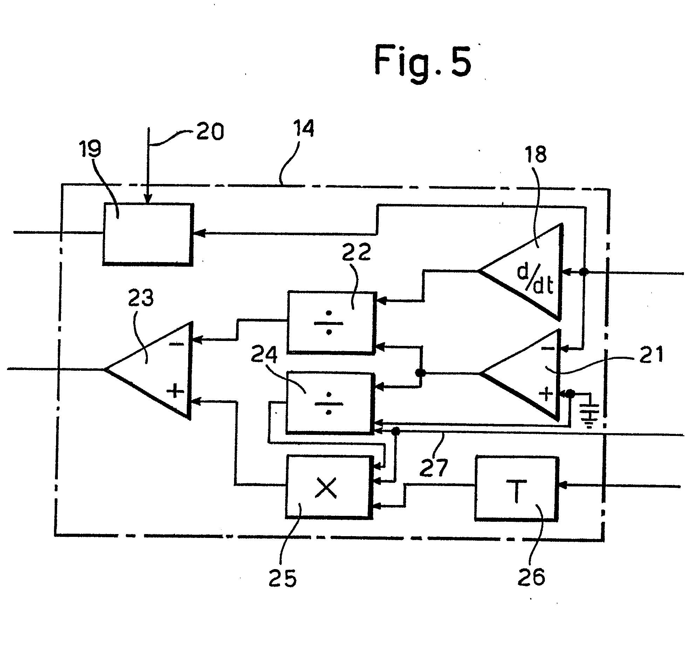

A sensor 13 (Figure 4) is associated with the rod 7 and produces a signal indicative of the linear displacement of the rod 7 and, consequently, of the displacement of the piston 8 within the cylinder 4.

The signal produced by the sensor 13 is fed to an electrical circuit 14 the nature of which is illustrated in greater detail in Figure 5.

A pressure sensor 15 is associated with the hydraulic cylinder 9. The sensor 15 is able to detect the pressure in the hydraulic cylinder and, consequently, variations in the force which resists the sliding of the piston 8 within the cylinder 4.

A probe 16 of an actuating sensor is keyed onto the shaft of the screw 10. The probe 16 is thus able to detect the working condition of the motor 10a.

This allows the time necessary for loading a predetermined quantity of material to be extruded into the cylinder 4 to be determined as will be better seen below.

An actuator 17 controls the action of the cutter 3.

In Figure 5, which illustrates the nature of the circ--uit 14, a·shunt element 18 is fed with the signal produced by the detector 13. The element 18 thus produces at its output a signal indicative of the speed of sliding of the piston 8 within the cylinder 4. As well as by the feed pressure of the hydraulic cylinder 9, this speed is normally determined by numerous factors such as the density of the material to be extruded, the cross-section of the extrusion die, and may also be varied by an external operator during an individual extrusion cycle.

A device 19 which is programmable from the exterior by a control 20 operates to supply the actuator 17 with an actuating command for the cutter 12 every time the piston 8 advances by a predetermined distance in its sliding movement within the cylinder 4. The amplitude of this distance, which identifies a corresponding quantity of material extruded through the die 5, can be selected externally by acting on the control 20.

A subtractor element 21 subtracts the signal produced by the sensor 13 from a signal level corresponding to the complete length of the sliding movement of the piston 8 within the cylinder 4. The element 21 thus presents at its output a continuous signal which is indicative of the distance between the position instantaneously occupied by the piston 8 and the end position (the advanced position) of the movement of the piston, that is to say, the position in which the piston 8 is brought to bear against the die 5.

In a first divider element 22 the signal produced by the subtractor element 21 is divided by the speed signal produced by the shunt element 18. The signal generated by the first divider element 22, which provides a constant indication of the time needed until the piston completes the sliding movement corresponding to the carrying out of the extrusion operation, is fed to one of the inputs of a comparator element 23 the function of which will be further described below.

In a second divider element 24, the continuous signal corresponding to the entire length of the sliding stroke of the piston 8 within the cylinder 4 is divided by the output signal from the subtractor element 21. The output of the second divider element 24 thus presents a signal indicative of the ratio between the entire length of the stroke of the piston 8 within the cylinder 4 and the length of the fraction of this travel between the position instantaneously occupied by the piston 8 and the final position of sliding in which the piston 8 is brought to bear against the die 5 (the advanced position).

This signal is fed to one of the inputs of a multiplier element 25. To the other input of the element 25,however, isfed a signal produced by a sensor 26 connected to the probe 16, the signal generated by the sensor 26 being indicative of the duration of the periods of activation of the motor driving the screw 10. The sensor 26 thus allows the establishment of the period of time necessary to actuate the screw 10 to load a predetermined quantity of material to be extruded into the cylinder 4.

The operation of the divider element 24 and the multiplier element 25 is made dependant on the transmission, on a connecting line 27, of an enabling signal emitted by the pressure sensor 15.

The output signal from the multiplier element 25 is transmitted to the input of the comparator element 23.

The operation of the machine according to the invention starts from an initial condition in which the piston 8 is in a position substantially corresponding to the advanced position, that is to say close to the extrusion die 5.

In this condition, a predetermined quantity of material to be extruded, for example, a rubber mixture, is fed to the mouth 10b of the screw 10 which loads this material into the cylinder 4. The actuation of the screw 10 is detected by the probe 16 so that, when the screw 10 is stopped at the end of the initial loading operation (either by an operator or due to a command imparted by a suitable sensor), there is stored in the sensor element 26 a signal indicative of the time which has been necessary to load the quantity of material fed to the screw 10 into the cylinder 4.

At this point, the volumetric pump 9a is operated to return the piston towards its withdrawn position adjacent the base wall 6. During this return stroke, the head 7a of the rod 7 bears against the lips 8c of the lugs 8b moving the piston 8 towards the base wall 6 and allowing the passage (or drawing) of the material to be extruded through the central aperture 8a of the piston 8 (Figure 3).

When, at the end of this return stroke, the piston 8 is adjacent the base wall 6, the hydraulic cylinder 9 is operated so as to reverse the direction of movement of the rod 7. The piston 8 then returns towards its advanced position, thrusting the material to be extruded towards the die 5 since the head 7a of the rod 7 bears against the piston 8 closing the aperture 8a, as illustrated in Figure 2.

The force which resists the sliding of the piston 8 is kept relatively small until the condition is reached in which the material to be extruded,which is loaded into the cylinder 4,is compressed between the piston 8 and the die 5. In this condition (which corresponds to the compaction of the material within the cylinder 4) there is a rapid increase in the force which resists the sliding of the piston 8.

This increase is detected by the pressure sensor 15 associated with the hydraulic cylinder 9. The sensor 15 then feeds the enabling signal to the divider element 24 and the multiplier element 25.

The divider element 24 calculates the ratio between the entire length of the stroke of the piston 8 within the cylinder 4 and the instantaneous fraction of this stroke between the piston 8 and the die 5.

In the multiplier element 25,this ratio (which corresponds to the ratio between the maximum volume of compacted material which may be fed to the cylinder 4 through the screw 10 and the volume of compaction of the material initially loaded into the machine) is multiplied by the output signal from the sensor 26, which corresponds to the period of time for which it is necessary to actuate the screw 10 to effect the initial loading of material to be extruded.

The output of the multiplier element 25 thus presents a signal which is indicative of the period of time needed to fill completely the cylinder 4 with the material to be extruded. The signal is stored at the output of the multiplier element 25 and fed permanently to the input of the comparator element 23.

Upon completion of this operation, the machine according to the invention is ready to carry out the normal operating cycles of an extruder.

It should be stressed that the preliminary sequence of operations described above allows a precise indication of the time necessary for completely loading the cylinder 4 to be obtained independently of the characteristics of the material to be extruded. This is particularly important when the machine is used for extruding plastics materials or rubber, the fluid-dynamic and volumetric behaviour of which is greatly influenced by the manner in which the operations of loading, heating, and compaction within the cylinder 4 are carried out.

The normal cycle of operation of the machine is started by displacing the piston 8 towards its advanced position, causing the extrusion through the die 5 of the material contained in the portion of the cylinder 4 between the piston 8 and the die 5 itself. As described above, during this working stroke, the head 7a of the rod 7 bears against the piston 8 closing the aperture 8a, as illustrated in Figure 2.

Operation of the control 20 of the element 19, after each linear movement of the piston 8 corresponding to the extrusion of a selected quantity of material, causes the element 19 itself to command the actuator 17 which effects cutting the extrusion M. The selection of the quantity of material contained in each extruded piece may be achieved by operation of the control 20, account being taken of the cross-section of the die 5 so that the extrusion is divided into pieces of predetermined weight and volume.

At the same time, during the working stroke of the piston 8, the divider circuit 22 produces (in a continual manner or at discrete intervals) a signal indicative of the period of time needed for completing the extrusion operation, which coincides with the stoppage of the piston 8 against the die 5. The value of this interval is influenced constantly by the instantaneous or almost instantaneous variation in the extrusion speed which is determined, as described previously, by the effect of local variations in the characteristics of the material to be extruded or by external actions carried out on the machine. These variations have, so to speak, a regulating function on the time remaining for the extrusion operation, a time which tends to decrease constantly as the extrusion operation proceeds.

The value of the signal produced by the divider element 22 is compared (instant by instant or at discrete intervals, for example, every half second) with the reference signal generated by the multiplier element 25.

The result of this comparison is used to establish whether the motor 10a of the screw 10 must be operated in order to load more material into the cylinder 4.

In particular, if the value of the signal produced by the divider 22 (the time remaining for the extrusion operation) is less than or equal to the signal generated by the multiplier 25 (the time necessary to load the cylinder 4), the motor 10a is actuated and new material to be extruded is loaded into the cylinder 4. If, on the other hand, the signal produced by the divider 22 has a value less than the value of the signal produced by the multiplier 25, the operation of the motor 10a is prohibited.

The arrangement described is such that the loading of the material to be extruded is matched constantly to the speed with which the extrusion operation proceeds.

Thus, when the piston 8 is brought to bear against the die 5 at the end of the extrusion operation, it is possible to fill completely that portion of the cylinder 4 between the piston 8 and the base wall 6 with material to be extruded.

Under this condition, it is possible to effect the immediate return of the piston 8 towards its withdrawn position and the starting of a new extrusion operation.

Any down times which would have occurred after the piston had been returned to its withdrawn position, when it would have been necessary to await the completion of the filling of the cylinder 4 before starting a new advance of the piston 8 to effect a new extrusion operation, are thus eliminated. As described above, during the return stroke of the piston 8, the head 7a of the rod 7 bears against the lips 8c of the lugs 8b moving the piston 8 and allowing the passage (or drawing) of the material to be extruded through the central aperture 8a in the piston.

The fact that the loading of the new material to be extruded is interrupted when the speed of sliding of the piston 8 falls and the extrusion operation is slowed down avoids the situation in which the piston 8 is thrust towards the die 5 not only by the pressure in the hydraulic cylinder 9, but also by the pressure exerted in the portion of the cylinder 4 between the piston 8 and the base wall 6 by the material to be extruded which is loaded into the cylinder 4 by the screw 10. This situation could occur if the screw 10 were operated continuously at a constant speed during the extrusion operation.

Claims:

1. Machine for extruding preformed pieces, particularly preformed rubber pieces intended to undergo a further moulding operation, comprising, in combination, an extruder and a cutter for dividing the material leaving the extruder, characterised in that the extruder comprises:

    - a cylinder (4) carrying an extrusion die (5) at one end and closed at the other end by a base wall (6);

    - a piston (8) sealingly slidable in the cylinder (4);

    - a push rod (7) connected to the piston (8) and projecting from the cylinder (4) through a hole (6a) in the base wall (6);

    - means (9) for reciprocating the rod (7) and causing the displacement of the piston (8) between an advanced position in which the piston (8) is in contact with the extrusion die (5), and a withdrawn position in which the piston (8) is at a predetermined distance from the base wall (6), and

    - a device (10) for continuously feeding material to be extruded into that end portion (4b) of the cylinder (4) which is between the base wall (6) and the piston (8) when the piston (8) is in its withdrawn position, the piston (8) being provided with passage means (8a) controlled by valve means arranged to allow the passage of the material to be extruded through the piston (8) during the return stroke, in which the piston (8) is moved from the advanced position to the withdrawn pos- -ition, and to cut off this passage during the working stroke in which the piston (8) moves from the withdrawn position to the advanced position.

2. A machine according to Claim 1, characterised in that the end of the rod (7) connected to the piston (8) has an enlarged head (7a), and the piston (8) has a central aperture (8a) and a plurality of lugs (8b) which extend axially along the inner surface of the cylinder (4) towards the base wall (6) each having at its free end a lip (8c) turned inwardly of the cylinder (4), the enlarged head (7a) of the rod (7) being slidable within the lugs (8b) between two stops constituted respectively by the turned lips (8c) and the piston (8), whereby, during the return stroke of the piston (8), the enlarged head (7a) of the rod (7) bears against the lips (8c) to drive the piston (8) and allow the passage of the material to be extruded through the central aperture (8a) and, during the working stroke of the piston (8), the enlarged head (7a) of the rod (7) bears against the piston (8) to close this aperture (8a).

3. A machine according to Claim 1 or Claim 2, characterised in that the continuous feeding device is constituted by a motor driven screw (10).

4. A machine according to Claim 3, characterised in that the screw (10) has a loading mouth (10b) at one end and communicates, at the opposite end, with the said end portion of the cylinder (4) through a connecting duct (11).

5. A machine according to Claim 3 or Claim 4, characterised in that the screw (10) is provided with heating means (10c) and that means (12) are provided for creating a lower pressure in the connecting duct (11).

6. A machine according to any one of the preceding claims, characterised in that it includes a sensor (13) of the linear displacement of the rod (7), and means (14, 15) for driving the cutter (3) and causing the cutting of the extrusion (M) at each linear displacement of the rod (7) corresponding to a predetermined value.

7. A machine according to any one of Claims 1 to 5, characterised in that it includes:

- a device (13) for sensing the instantaneous position occupied by the piston (8) during its stroke from the withdrawn position to the advanced position;

- tachometric means (18, 21, 22) associated with the sensor device (13) and being sensitive to the displacement velocity of the piston (8) and able to produce a signal indicative of the time necessary for the advanced position to be reached from the instantaneous position occupied by the piston (8), and

- a comparator device (23) in which the signal produced by the tachometric means (18, 21, 22) is compared with a reference signal indicative of the time needed to fill the cylinder with material to be extruded by means of the feed device (10), the comparator device (23) being able to act on the feed device (10) to control the operation of this feed device (10) when the value of the signal produced by the tachometric means (18, 21, 22) is less than or equal to the value of the reference signal and to inhibit the operation of the feed device (10) when the value of the signal produced by the tachometric means (18, 21, 22) is greater than the value of the reference signal.

8. A machine according to Claim 7, characterised in that it further includes:

- an actuation sensor (16, 26) associated with the feed device (10) and able to generate a signal indicative of the time for which the feed device (10) must be activated to load the cylinder (4) with a predetermined quantity of material to be extruded,

- a force sensor (15) associated with the piston (8) and able to detect the increase in the

force resisting the sliding of the piston (8) within the cylinder (4) corresponding to the condition of operation in which the predetermined quantity of material to be extruded is compressed between the piston (8) and the extrusion die (5), and - a processing circuit comprising:

(a) divider means (24) connected to the device (13) for sensing the position of the piston (8) and to the force sensor (15), in order to generate a signal indicative of the ratio between the entire length of the stroke of the piston (8) between the withdrawn position and the advanced position and the length of the fraction of this stroke between the advanced position and the position of the piston at which the increase in resistant force occurs, and

(b) multiplier means (25) connected to the divider means (24) and to the actuation sensor (16, 26) which is able to generate a signal corresponding to the product of the ratio signal generated by the divider means (24) and the signal of the actuating time generated by the actuating sensor (16, 26), the signal generated by the multiplier means (25) constituting the reference signal indicative of the time needed to fill the cylinder (4) with material to be extruded.

# Fig. 1

# Fig. 4

1/3

0108185

Fig.2

Fig.3

# Fig. 5